# EUROPEAN PATENT SPECIFICATION

(11) **EP 3 321 809 B1**
(45) Date of publication and mention of the grant of the patent: **12.08.2020**
(21) Application number: 15901909.0
(22) Date of filing: 21.08.2015
(51) Int. Cl.: G06F 12/00, G06F 12/0871

(54) **MEMORY ACCESS METHOD, APPARATUS AND SYSTEM**
SPEICHERZUGANGSVERFAHREN, VORRICHTUNG UND SYSTEM
PROCÉDÉ, APPAREIL ET SYSTÈME D'ACCÈS MÉMOIRE

(43) Date of publication of application: 16.05.2018
(73) Proprietor: Huawei Technologies Co., Ltd., Longgang District Shenzhen, Guangdong 518129 (CN)
(72) Inventor: LUO, Daxin, Shenzhen Guangdong 518129 (CN); LI, Gang, Shenzhen Guangdong 518129 (CN); PAN, Shuncheng, Shenzhen Guangdong 518129 (CN)
(74) Representative: Gill Jennings & Every LLP
(86) International application number: PCT/CN2015/087817
(87) International publication number: WO 2017/031637

(56) References cited:
- CN-A- 101 510 144
- CN-A- 102 035 881
- CN-A- 104 503 707
- US-A- 5 778 429
- US-A- 5 829 052
- US-A- 5 933 848
- US-A1- 2004 184 340
- US-A1- 2007 260 821

## Description

### TECHNICAL FIELD

The present invention relates to the field of computer technologies, and in particular, to a memory access method, apparatus, and system.

### BACKGROUND

In a big data environment, a local memory device and a remote memory device are usually disposed in a system in consideration of expanding a memory capacity. Usually, a speed at which a CPU (Central Processing Unit, central processing unit) accesses the local memory device is greater than a speed at which the CPU accesses the remote memory device. Therefore, to improve overall access efficiency of the system, entire storage space of the local memory device is usually used as a cache of the remote memory device. Therefore, a memory access method is: when the local memory device includes a to-be-accessed memory area, performing an access operation on the local memory device; and when the local memory device does not include the to-be-accessed memory area, performing an access operation on the remote memory device.

When a capacity of the local memory device is greater than a capacity of a cache required by the remote memory device, the foregoing memory access method has the following disadvantage: The storage space of the local memory device cannot be fully used, causing relatively poor overall performance of the system.

US 5,778,429 relates to parallel processor system including a cache memory subsystem that has independently addressable local and remote data areas:

US 2007/0260821 A1 discloses a memory controller for a node in a multi-node computer system that comprises logic and a control unit. The logic is configured to determine if an address corresponding to a request received by the memory controller on an intranode interconnect is a remote address or a local address. A first portion of the memory in the node is allocated to store copies of remote data and a remaining portion stores local data.

### SUMMARY

Embodiments of the present invention provide a memory access method, apparatus, and system, to appropriately use storage space of a local memory device, so as to improve overall performance of a system.

The invention is defined in the independent claims. Further technical features have been defined in the respective dependent claims.

In the foregoing technical solutions, a part of a local memory device is used as a remote cache, another part is used as a local memory. When a to-be-accessed memory area is in the local memory, an access operation is performed on the to-be-accessed memory area according to a memory access request; and when the to-be-accessed memory area is in a remote memory device, and the remote cache includes a cache block corresponding to the to-be-accessed memory area, an access operation is performed on the cache block corresponding to the to-be-accessed memory area according to the memory access request. Usage of the local memory device can be effectively improved in the foregoing technical solutions compared with a prior-art solution in which entire storage space of the local memory is directly used as the remote cache, and when the local memory device includes the to-be-accessed memory area, an access operation is performed on the local memory device; and when the local memory device does not include the to-be-accessed memory area, an access operation is performed on the remote memory device. For example, when a capacity of the local memory device is greater than a capacity of a cache required by a remote memory device (that is, the remote cache), partial storage space of the local memory device may be used as the remote cache, and remaining storage space of the local memory device is used as the local memory. In this way, by appropriately setting the capacity of the remote cache, the storage space of the local memory device can be effectively used, so as to improve overall performance of a system.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a system architecture of an electrical interconnection local memory device and an optical interconnection remote memory device in the prior art;
FIG. 2 is a schematic structural diagram of a system architecture applied to the technical solutions according to an embodiment of the present invention;
FIG. 3 is a schematic flowchart of a memory access method according to an embodiment of the present invention;
FIG. 4A and FIG. 4B are a schematic flowchart of another memory access method according to an embodiment of the present invention;
FIG. 5 is a schematic structural diagram of a memory access apparatus according to an embodiment of the present invention; and
FIG. 6 is a schematic structural diagram of another memory access apparatus according to an embodiment of the present invention.

### DESCRIPTION OF EMBODIMENTS

The following describes an example of the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

First, some terms used in this specification are described as follows:
(1) A local memory device, a remote cache, and a local memory
   "The local memory device" is a memory device directly mounted on a system bus. A connection manner between the local memory device and the system bus is an electrical connection. Generally, the local memory device and a CPU are located on a same printed circuit board.
   In the embodiments of the present invention, a part of storage space of the local memory device is used as a cache of a remote memory device, that is, used to store data in the remote memory device (that is, remote data). This part of storage space is the "remote cache". Another part of storage space of the local memory device is used to store local data, and the another part of storage space is the "local memory".
   The "local memory" and the "remote cache" may be located in a same local memory device, or may be located in different local memory devices respectively.
(2) A remote memory device

"The remote memory device" is a memory device indirectly mounted on a system bus. Preferably, the remote memory device is the memory device connected to the system bus by means of optical interconnection such as a fiber or an optical waveguide. In the accompanying drawings in the embodiments of the present invention, an example in which the remote memory device is connected to the system bus by using the fiber is used for description. Generally, the remote memory device and a CPU are located on different printed circuit boards, and a communication delay between the remote memory device and the CPU is greater than a communication delay between the local memory device and the CPU.

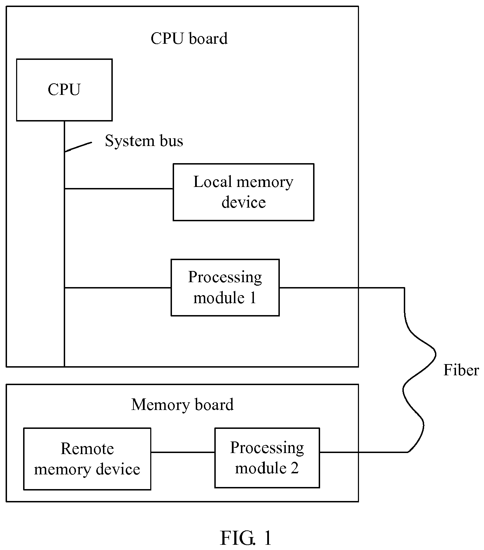

Referring to FIG. 1, FIG. 1 is a schematic diagram of a system architecture of an electrical interconnection local memory device and an optical interconnection remote memory device in the prior art. FIG. 1 includes a CPU board (CPU board) and a memory board (Memory board). The CPU board and the memory board are connected by using a fiber. The CPU board includes a CPU, a local memory device, a processing module 1, and another common computer hardware module not shown. The memory board includes a remote memory device, a processing module 2, and another common computer hardware module not shown. The processing module 1 and the processing module 2 are configured to implement conversion between an electrical signal and an optical signal, conversion of a transmission protocol, or the like.

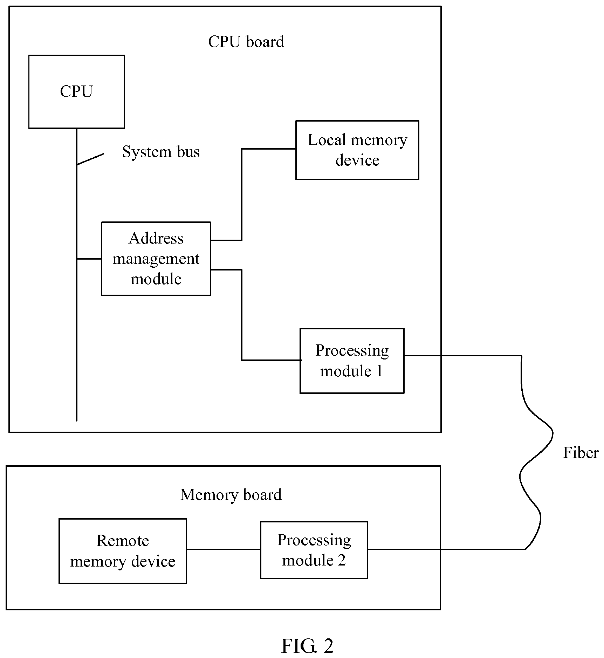

Referring to FIG. 2, FIG. 2 is a schematic structural diagram of a system architecture applied to the technical solutions according to an embodiment of the present invention. Compared with FIG. 1, a local memory device and a remote memory device in FIG. 2 are connected to a same interface by using an address management module. The address management module may be integrated into a memory controller, or may be disposed separately. The interface may be an interface integrated into the memory controller or a user-defined interface. In the system architecture, the address management module performs unified management (for example, unified addressing, or unified debugging) on the local memory device and the remote memory device by using the interface. The CPU accesses the local memory device and the remote memory device by using the interface.

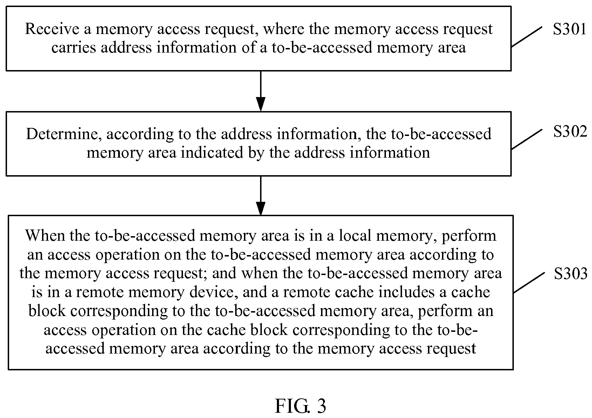

Referring to FIG. 3, FIG. 3 is a schematic flowchart of a memory access method according to an embodiment of the present invention. The method shown in FIG. 3 is applied to a computer system. A memory device of the computer system includes a local memory device and a remote memory device. The local memory device includes a local memory and a remote cache, and the remote cache is used as a cache of the remote memory device. The method shown in FIG. 3 includes the following steps S301 to S303.

S301. Receive a memory access request, where the memory access request carries address information of a to-be-accessed memory area.

The memory access method in this embodiment of the present invention may be executed by the address management module in FIG. 2. The address management module may be integrated into a memory controller, or may be disposed separately. The "to-be-accessed memory address" may be included in the local memory or the remote memory device. The "address information of the to-be-accessed memory area" may be a virtual address of the to-be-accessed memory area, or may be a physical address of the to-be-accessed memory area, or may be information about any other virtual address or physical address that can indicate the to-be-accessed memory area. For example, when the address management module is integrated into the memory controller, step S301 may be implemented as follows: The address management module receives a memory access request sent by a CPU. The memory access request carries the virtual address of the to-be-accessed memory area. When the address management module is disposed separately from the memory controller, step S301 may be implemented as follows: The address management module receives a memory access request sent by the memory controller. The memory access request carries the physical address of the to-be-accessed memory area.

The "memory access request" may be specifically a memory read request or a memory write request. When the memory access request is the memory write request, the memory access request may further carry to-be-written data, that is, data of the memory write request.

S302. Determine, according to the address information, the to-be-accessed memory area indicated by the address information.

For example, the physical address of the to-be-accessed memory area is determined according to the address information, so as to determine the to-be-accessed memory area.

S303. When the to-be-accessed memory area is in the local memory, perform an access operation on the to-be-accessed memory area according to the memory access request; and when the to-be-accessed memory area is in the remote memory device, and the remote cache includes a cache block corresponding to the to-be-accessed memory area, perform an access operation on the cache block corresponding to the to-be-accessed memory area according to the memory access request.

For example, the address management module may determine whether the physical address of the to-be-accessed memory area is an address of the local memory or an address of the remote memory device, and then determine whether the to-be-accessed memory area is in the local memory or in the remote memory device.

If the memory access request is the memory read request, when the to-be-accessed memory area is in the local memory, the address management module reads data from the to-be-accessed memory area; and when the to-be-accessed memory area is in the remote memory device, and the remote cache includes the cache block corresponding to the to-be-accessed memory area, the address management module reads data from the cache block corresponding to the to-be-accessed memory area.

If the memory access request is the memory write request, when the to-be-accessed memory area is in the local memory, the address management module writes the data of the memory write request into the to-be-accessed memory area; and when the to-be-accessed memory area is in the remote memory device, and the remote cache includes the cache block corresponding to the to-be-accessed memory area, the address management module writes the data of the memory write request into the cache block corresponding to the to-be-accessed memory area. Subsequently, data in the to-be-accessed memory area may be updated into the data of the memory write request.

According to the memory access method in this embodiment of the present invention, a part of a local memory device is used as a remote cache, and another part is used as a local memory, so that memory access is implemented. Usage of the local memory device can be effectively improved in the memory access method compared with a prior-art technical solution in which entire storage space of the local memory is directly used as the remote cache to implement memory access. For example, when a capacity of the local memory device is greater than a capacity of a cache required by a remote memory device (that is, the remote cache), partial storage space of the local memory device may be used as the remote cache, and remaining storage space of the local memory device is used as the local memory. In this way, by appropriately setting the capacity of the remote cache, the storage space of the local memory device can be effectively used, so as to improve overall performance of a system.

In an optional implementation, the method may further include: when the to-be-accessed memory area is in the remote memory device, and the remote cache does not include the cache block corresponding to the to-be-accessed memory area, performing an access operation on the to-be-accessed memory area according to the memory access request.

For example, when the to-be-accessed memory area is in the remote memory device, and the remote cache does not include the cache block corresponding to the to-be-accessed memory area, if the memory access request is the memory read request, the address management module reads the data from the to-be-accessed memory area; and if the memory access request is the memory write request, the address management module writes the data of the memory write request into the to-be-accessed memory area.

Further and optionally, the method may further include: creating the cache block corresponding to the to-be-accessed memory area in the remote cache; and writing the data in the to-be-accessed memory area into the cache block corresponding to the to-be-accessed memory area.

In another optional implementation, if the memory access request is the memory write request, when the to-be-accessed memory area is in the remote memory device, and the remote cache does not include the cache block corresponding to the to-be-accessed memory area, the address management module may further create the cache block corresponding to the to-be-accessed memory area in the remote cache, and write the data of the memory write request into the cache block corresponding to the to-be-accessed memory area.

In an optional implementation, before step S301, the method may further include the following steps (A) and (B).

Step (A): Determine a capacity of the local memory and a capacity of the remote cache in the local memory device.

Step (B): Assign memory addresses (that is, physical addresses) to the local memory and the remote memory device. Specifically, unified addressing is performed for the local memory and the remote memory device.

Step (A) may specifically include: determining the capacity of the remote cache in the local memory device according to a capacity of the remote memory device and a preset hit rate, where the capacity of the remote cache is separately in a positive correlation relationship with the capacity of the remote memory device and the preset hit rate; and using remaining capacity of the local memory device as the capacity of the local memory.

The "preset hit rate" is set in advance, and a specific value of the "preset hit rate" and a manner of obtaining the specific value are not limited in this embodiment of the present invention. For example, the preset hit rate may be a ratio of a capacity of a level 1 cache to a capacity of a level 2 cache in a CPU cache, a ratio of a capacity of a level 2 cache to a capacity of a level 3 cache, or the like, or may be a value determined according to an empirical value and a requirement in a specific application scenario, or the like.

Generally, a larger capacity of the remote memory device indicates a larger capacity of the remote cache, and a higher preset hit rate indicates a larger capacity of the remote cache. Preferably, the capacity of the remote cache = the capacity of the remote memory device x the preset hit rate.

It should be noted that step (A) may include: determining the capacity of the remote cache according to the capacity of the remote memory device and the preset hit rate and with reference to one or more pieces of information such as the capacity of the local memory device, a transmission path delay, or the empirical value.

In addition, it should be noted that, in a specific implementation, the method may further include: recording an address range of the local memory and an address range of the remote memory device. The "address range" includes a start address and an end address. Specifically, four registers are disposed in the system, and then a start address of the local memory, an end address of the local memory, a start address of the remote memory device, and an end address of the remote memory device are respectively recorded in the four registers.

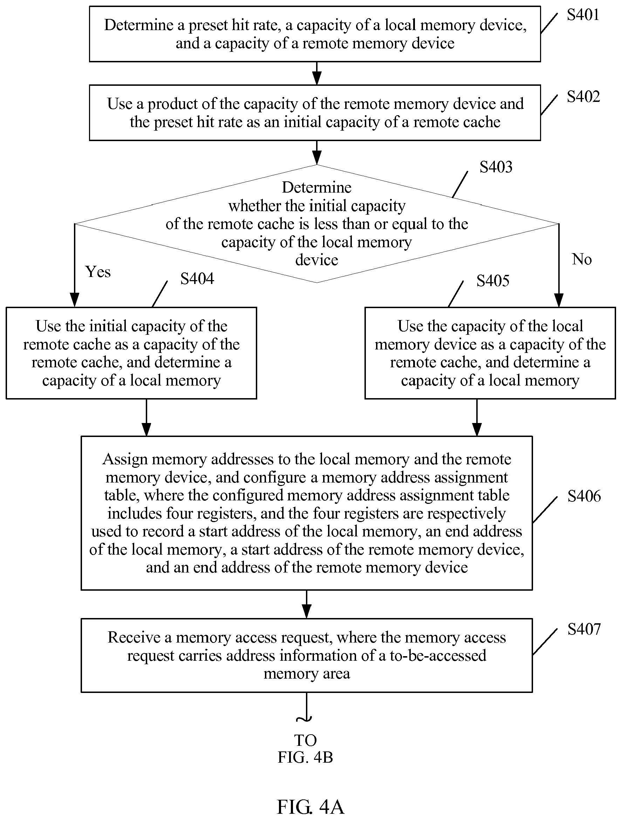

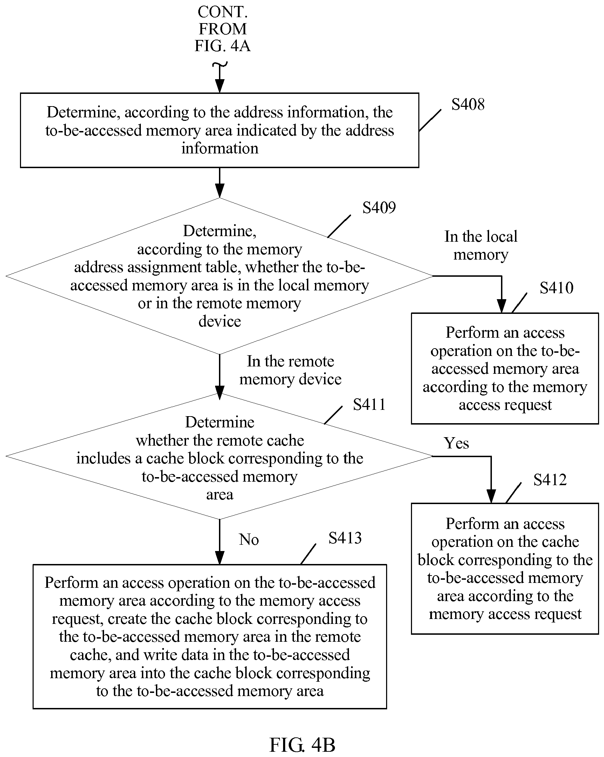

Referring to FIG. 4A and FIG. 4B, FIG. 4A and FIG. 4B are a schematic flowchart of a memory access method according to an embodiment of the present invention. The method shown in FIG. 4A and FIG. 4B includes the following steps S401 to S413. S401. Determine a preset hit rate, a capacity of a local memory device, and a capacity of a remote memory device.

In this embodiment, an example in which the preset hit rate is a ratio of a capacity of a level 1 cache to a capacity of a level 2 cache in a CPU cache is used for description. Usually, the capacity of the level 1 cache, the capacity of the level 2 cache, the capacity of the local memory device, and the capacity of the remote memory device are determined when a system is set.

If the capacity of the level 1 cache L1 is 32 KB and the capacity of the level 2 cache L2 is 256 KB, the preset hit rate α = L1/L2 = 1/8. It is assumed that the capacity C1 of the local memory device is 2 G, and the capacity Cr of the remote memory device is 8 G.

S402. Use a product of the capacity of the remote memory device and the preset hit rate as an initial capacity of a remote cache.

Based on the example in step S401, the initial capacity of the remote cache = Cr x α = 1 G.

S403. Determine whether the initial capacity of the remote cache is less than or equal to the capacity of the local memory device. If the initial capacity of the remote cache is less than or equal to the capacity of the local memory device, step S404 is performed. If the initial capacity of the remote cache is greater than the capacity of the local memory device, step S405 is performed.

S404. Use the initial capacity of the remote cache as a capacity of the remote cache, and determine a capacity of a local memory.

Based on the example in step S402, after step S404 is performed, a determined capacity of the remote cache is 1 G, and the capacity of the local memory is Cl - α x Cr = 1 G. In this scenario, a total capacity of a system memory is Cl + Cr - α x Cr = 9 G.

S405. Use the capacity of the local memory device as a capacity of the remote cache, and determine a capacity of a local memory.

If α = 1/8, the capacity Cl of the local memory device is 8 G, and the capacity Cr of the remote memory device is 128 G, the initial capacity of the remote cache = Cr x α = 8 G. After step S405 is performed, a determined capacity of the remote cache is 8 G, and the capacity of the local memory is 0. In this scenario, a total capacity of a system memory is Cl + Cr - α x Cr = 128 G.

It should be noted that, when the capacity of the local memory device, the capacity of the remote memory device, or the preset hit rate changes, the capacity of the remote cache may be determined again.

In addition, it should be noted that, although in step S405, entire storage space of the local memory device is used as the remote cache, in this embodiment, the entire storage space of the local memory device is used as the remote cache only on the basis of performing steps S401 to S403 and only when a specific condition is met (that is, a determining result of step S403 is "no"). However, in the prior art, the entire storage space of the local memory device is directly used as the remote cache when no operation is performed. There is an essential difference between this embodiment and the prior art.

S406. Assign memory addresses to the local memory and the remote memory device, and configure a memory address assignment table (Memory Address Assigned Table, MAAT), where the configured memory address assignment table includes four registers, and the four registers are respectively used to record a start address of the local memory, an end address of the local memory, a start address of the remote memory device, and an end address of the remote memory device.

If an address assigned to a memory having a total capacity 9 G is [0x0000 0000 0000 0000, 0x0000 0002 3FFF FFFF], an address of the local memory may be [0x0000 0000 0000 0000, 0x0000 0000 3FFF FFFF], and an address of the remote memory device may be [0x0000 0000 4000 0000, 0x0000 0002 3FFF FFFF].

S407. Receive a memory access request, where the memory access request carries address information of a to-be-accessed memory area.

S408. Determine, according to the address information, the to-be-accessed memory area indicated by the address information.

S409. Determine, according to the memory address assignment table, whether the to-be-accessed memory area is in the local memory or in the remote memory device. If the to-be-accessed memory area is in the local memory, step S410 is performed. If the to-be-accessed memory area is in the remote memory device, step S411 is performed.

Based on the example in step S406, if 0x0000 0000 0000 0000 ≤ a physical address of the to-be-accessed memory area ≤ 0x0000 0000 3FFF FFFF, the to-be-accessed memory area is in the local memory; if 0x0000 0000 4000 0000 ≤ a physical address of the to-be-accessed memory area ≤ 0x0000 0002 3FFF FFFF, the to-be-accessed memory area is in the remote memory device.

S410. Perform an access operation on the to-be-accessed memory area according to the memory access request.

S411. Determine whether the remote cache includes a cache block corresponding to the to-be-accessed memory area.

If the remote cache includes the cache block corresponding to the to-be-accessed memory area, a cache is hit, and step S412 is performed. If the remote cache does not include the cache block corresponding to the to-be-accessed memory area, a cache is not hit, and step S413 is performed.

S412. Perform an access operation on the cache block corresponding to the to-be-accessed memory area according to the memory access request.

S413. Perform an access operation on the to-be-accessed memory area according to the memory access request, create the cache block corresponding to the to-be-accessed memory area in the remote cache, and write data in the to-be-accessed memory area into the cache block corresponding to the to-be-accessed memory area. Any memory access method provided above may further include: counting a hit rate of the remote cache according to a preset period T; when the hit rate of the remote cache is less than a preset first threshold, dynamically increasing the capacity of the remote cache; and when the hit rate of the remote cache is greater than a preset second threshold, dynamically decreasing the capacity of the remote cache, where the first threshold is less than the second threshold.

The "hit rate of the remote cache" is a ratio of a quantity of times of actually accessing the remote cache to a total quantity of times of accessing a memory within the preset period T.

A specific value and a value obtaining manner of "the preset period T", "the first threshold", and "the second threshold" are not limited in this embodiment of the present invention. For example, the first threshold may be 90%, and the second threshold may be 100%. For another example, the first threshold may be 80%, and the second threshold may be 90%, or the like.

A manner of dynamically adjusting the capacity of the remote cache is not limited in this embodiment of the present invention. For example, the capacity of the remote cache may be progressively increased or decreased according to a value.

It should be noted that, a change of the capacity of the remote cache affects the total capacity of the system memory, and in a system running process, the total capacity of the system memory usually does not change; therefore, an adjusted capacity of the remote cache generally takes effect only when the system is restarted.

In the optional implementation, the hit rate of the remote cache is counted according to the preset period T, and the capacity of the remote cache is adjusted when a specific condition is met. Therefore, when an adjusted capacity of the remote cache is obtained by means of one or more adjustments, the hit rate of the remote cache is greater than or equal to the first threshold, and is less than or equal to the second threshold. Because the first threshold and the second threshold are usually determined according to a characteristic such as preferred overall performance of the system, system performance can be improved by using the optional implementation.

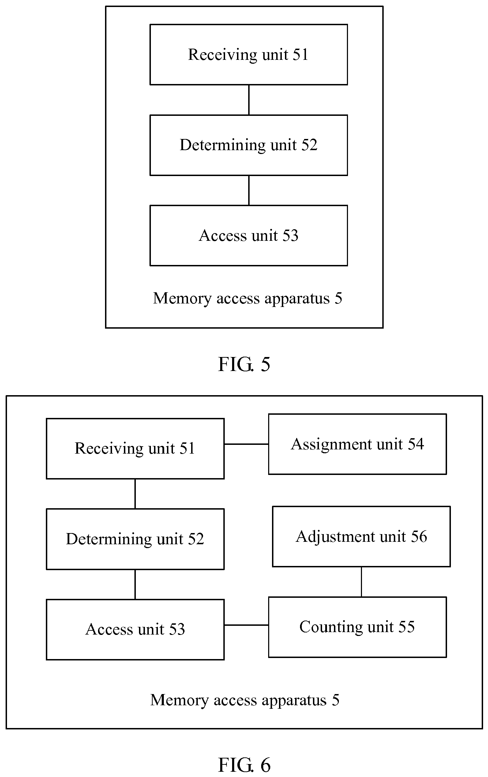

Referring to FIG. 5, FIG. 5 is a schematic structural diagram of a memory access apparatus according to an embodiment of the present invention. A memory access apparatus 5 shown in FIG. 5 is configured to execute any memory access method provided above. The memory access apparatus 5 is applied to a computer system. A memory device of the computer system includes a local memory device and a remote memory device. The local memory device includes a local memory and a remote cache, and the remote cache is used as a cache of the remote memory device. The memory access apparatus 5 includes a receiving unit 51, a determining unit 52, and an access unit 53.

The receiving unit 51 is configured to receive a memory access request, where the memory access request carries address information of a to-be-accessed memory area. The determining unit 52 is configured to determine, according to the address information, the to-be-accessed memory area indicated by the address information.

The access unit 53 is configured to: when the to-be-accessed memory area is in the local memory, perform an access operation on the to-be-accessed memory area according to the memory access request, where the local memory device includes the local memory and the remote cache, and the remote cache is used as the cache of the remote memory device; and when the to-be-accessed memory area is in the remote memory device, and the remote cache includes a cache block corresponding to the to-be-accessed memory area, perform an access operation on the cache block corresponding to the to-be-accessed memory area according to the memory access request.

In an optional implementation, the access unit 53 is further configured to: when the to-be-accessed memory area is in the remote memory device, and the remote cache does not include the cache block corresponding to the to-be-accessed memory area, perform an access operation on the to-be-accessed memory area according to the memory access request.

For example, in the optional implementation, the access unit 53 is further configured to create the cache block corresponding to the to-be-accessed memory area in the remote cache, and write data in the to-be-accessed memory area into the cache block corresponding to the to-be-accessed memory area.

In another optional implementation, the memory access request is a memory write request, and the access unit 53 is further configured to: when the to-be-accessed memory area is in the remote memory device, and the remote cache does not include the cache block corresponding to the to-be-accessed memory area, create the cache block corresponding to the to-be-accessed memory area in the remote cache, and write data of the memory write request into the cache block corresponding to the to-be-accessed memory area.

In another optional implementation, the determining unit 52 is further configured to determine a capacity of the local memory and a capacity of the remote cache in the local memory device. In this case, as shown in FIG. 6, the memory access apparatus 5 may further include an assignment unit 54, configured to assign memory addresses to the local memory and the remote memory device.

For example, when executing the determining a capacity of the local memory and a capacity of the remote cache in the local memory device, the determining unit 52 is specifically configured to: determine the capacity of the remote cache in the local memory device according to a capacity of the remote memory device and a preset hit rate, where the capacity of the remote cache is separately in a positive correlation relationship with the capacity of the remote memory device and the preset hit rate; and use a remaining capacity of the local memory device as the capacity of the local memory.

In another optional implementation, as shown in FIG. 6, the memory access apparatus 5 may further include a counting unit 55 and an adjustment unit 56. The counting unit 55 is configured to count a hit rate of the remote cache according to a preset period T. The adjustment unit 56 is configured to: when the hit rate of the remote cache is less than a preset first threshold, dynamically increase the capacity of the remote cache; and when the hit rate of the remote cache is greater than a preset second threshold, dynamically decrease the capacity of the remote cache. The first threshold is less than the second threshold.

It should be noted that, the memory access apparatus 5 may be integrated into a memory controller, or is disposed separately from a memory controller. For descriptions of related content in the memory access apparatus 5 provided in this embodiment, refer to the method embodiments provided above, and details are not described herein again.

According to the memory access apparatus in this embodiment, a part of a local memory device is used as a remote cache, and another part is used as a local memory, so that memory access is implemented. Usage of the local memory device can be effectively improved in this embodiment compared with a prior-art technical solution in which entire storage space of the local memory is directly used as the remote cache to implement memory access. For example, when a capacity of the local memory device is greater than a capacity of a cache required by a remote memory device (that is, the remote cache), partial storage space of the local memory device may be used as the remote cache, and remaining storage space of the local memory device is used as the local memory. In this way, by appropriately setting the capacity of the remote cache, the storage space of the local memory device can be effectively used, so as to improve overall performance of a system.

In addition, an embodiment of the present invention further provides a memory controller. The memory controller includes any memory access apparatus 5 provided above.

In addition, an embodiment of the present invention further provides a memory access system. The memory access system includes a local memory device, a remote memory device, and any memory access apparatus 5 provided above. The local memory device includes a local memory and a remote cache, and the remote cache is used as a cache of the remote memory device.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely for an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a ROM (Read-Only Memory, read-only memory), a RAM (Random Access Memory, random access memory), a magnetic disk, or an optical disc.

Finally, it should be noted that the foregoing embodiments are merely intended for describing the technical solutions of the present invention but not for limiting the present invention.

## Claims

1. A memory access method, for use in a computer system, wherein a memory device of the computer system comprises a local memory device and a remote memory device, and the method comprises:
receiving (S301) a memory access request, wherein the memory access request carries address information of a to-be-accessed memory area;
determining (S302), according to the address information, the to-be-accessed memory area indicated by the address information;
when the to-be-accessed memory area is in local memory, performing (S303) an access operation on the to-be-accessed memory area according to the memory access request, wherein the local memory device comprises the local memory and a remote cache, and the remote cache is used as a cache of the remote memory device; and
when the to-be-accessed memory area is in the remote memory device, and the remote cache comprises a cache block corresponding to the to-be-accessed memory area, performing (S303) an access operation on the cache block corresponding to the to-be-accessed memory area according to the memory access request;
wherein before the receiving a memory access request, the method further comprises:
determining a capacity of the local memory and a capacity of the remote cache in the local memory device; and
assigning memory addresses to the local memory and the remote memory device;
**characterised in that** the determining a capacity of the local memory and a capacity of the remote cache in the local memory device comprises:
determining the capacity of the remote cache in the local memory device according to a capacity of the remote memory device and a preset hit rate, wherein the capacity of the remote cache is separately in a positive correlation relationship with the capacity of the remote memory device and the preset hit rate; and
using a remaining capacity of the local memory device as the capacity of the local memory.

2. The method according to claim 1, wherein the method further comprises:
when the to-be-accessed memory area is in the remote memory device, and the remote cache does not comprise the cache block corresponding to the to-be-accessed memory area, performing an access operation on the to-be-accessed memory area according to the memory access request.

3. The method according to claim 2, wherein the method further comprises:
creating the cache block corresponding to the to-be-accessed memory area in the remote cache; and
writing data in the to-be-accessed memory area into the cache block corresponding to the to-be-accessed memory area.

4. The method according to claim 1, wherein the memory access request is a memory write request, and the method further comprises:
when the to-be-accessed memory area is in the remote memory device, and the remote cache does not comprise the cache block corresponding to the to-be-accessed memory area, creating the cache block corresponding to the to-be-accessed memory area in the remote cache, and writing data of the memory write request into the cache block corresponding to the to-be-accessed memory area.

5. The method according to any one of claims 1 to 4, wherein the method further comprises:
counting a hit rate of the remote cache according to a preset period T;
when the hit rate of the remote cache is less than a preset first threshold, dynamically increasing the capacity of the remote cache; and
when the hit rate of the remote cache is greater than a preset second threshold, dynamically decreasing the capacity of the remote cache, wherein
the first threshold is less than the second threshold.

6. A memory access apparatus for use in a computer system, wherein a memory device of the computer system comprises a local memory device and a remote memory device, and the memory access apparatus comprises:
a receiving unit (51), configured to receive a memory access request, wherein the memory access request carries address information of a to-be-accessed memory area;
a determining unit (52), configured to determine, according to the address information, the to-be-accessed memory area indicated by the address information; and
an access unit (53), configured to: when the to-be-accessed memory area is in local memory, perform an access operation on the to-be-accessed memory area according to the memory access request, wherein the local memory device comprises the local memory and a remote cache, and the remote cache is used as a cache of the remote memory device; and when the to-be-accessed memory area is in the remote memory device, and the remote cache comprises a cache block corresponding to the to-be-accessed memory area, perform an access operation on the cache block corresponding to the to-be-accessed memory area according to the memory access request;
wherein the determining unit is further configured to determine a capacity of the local memory and a capacity of the remote cache in the local memory device, and
the memory access apparatus further comprises an assignment unit (54), configured to assign memory addresses to the local memory and the remote memory device;
**characterised in that**,
when executing the determining a capacity of the local memory and a capacity of the remote cache in the local memory device, the determining unit is specifically configured to:
determine the capacity of the remote cache in the local memory device according to a capacity of the remote memory device and a preset hit rate, wherein the capacity of the remote cache is separately in a positive correlation relationship with the capacity of the remote memory device and the preset hit rate; and
use a remaining capacity of the local memory device as the capacity of the local memory.

7. The memory access apparatus according to claim 6, wherein:
the access unit is further configured to: when the to-be-accessed memory area is in the remote memory device, and the remote cache does not comprise the cache block corresponding to the to-be-accessed memory area, perform an access operation on the to-be-accessed memory area according to the memory access request.

8. The memory access apparatus according to claim 7, wherein the access unit is further configured to:
create the cache block corresponding to the to-be-accessed memory area in the remote cache; and
write data in the to-be-accessed memory area into the cache block corresponding to the to-be-accessed memory area.

9. The memory access apparatus according to claim 6, wherein the memory access request is a memory write request, and
the access unit is further configured to: when the to-be-accessed memory area is in the remote memory device, and the remote cache does not comprise the cache block corresponding to the to-be-accessed memory area, create the cache block corresponding to the to-be-accessed memory area in the remote cache, and write data of the memory write request into the cache block corresponding to the to-be-accessed memory area.

10. The memory access apparatus according to any one of claims 6 to 9, further comprising:
a counting unit, configured to count a hit rate of the remote cache according to a preset period T; and
an adjustment unit, configured to: when the hit rate of the remote cache is less than a preset first threshold, dynamically increase the capacity of the remote cache; and when the hit rate of the remote cache is greater than a preset second threshold, dynamically decrease the capacity of the remote cache, wherein the first threshold is less than the second threshold.

11. A memory access system, comprising a local memory device, a remote memory device, and the memory access apparatus according to any one of claims 6 to 10, wherein the local memory device comprises a local memory and a remote cache, and the remote cache is used as a cache of the remote memory device.

## Patentansprüche

1. Speicherzugriffsverfahren zur Verwendung in einem Computersystem, bei dem eine Speichervorrichtung des Computersystems eine lokale Speichervorrichtung und eine Remote-Speichervorrichtung umfasst und das Verfahren Folgendes umfasst:
Empfangen (S301) einer Speicherzugriffsanforderung, wobei die Speicherzugriffsanforderung Adressinformationen eines Speicherbereichs enthält, auf den zugegriffen werden soll;
Bestimmen (S302), gemäß den Adressinformationen, des Speicherbereichs, auf den zugegriffen werden soll, der durch die Adressinformationen angegeben ist;
Ausführen (S303) einer Zugriffsoperation auf den Speicherbereich, auf den zugegriffen werden soll, gemäß der Speicherzugriffsanforderung, wenn sich der Speicherbereich, auf den zugegriffen werden soll, im lokalen Speicher befindet, wobei die lokale Speichervorrichtung den lokalen Speicher und einen Remote-Cache umfasst und der Remote-Cache als Cache der Remote-Speichervorrichtung verwendet wird; und
Ausführen (S303) einer Zugriffsoperation für den Cache-Block, der dem Speicherbereich entspricht, auf den zugegriffen werden soll, entsprechend der Speicherzugriffsanforderung, wenn sich der Speicherbereich, auf den zugegriffen werden soll, in der Remote-Speichervorrichtung befindet und der Remote-Cache einen Cache-Block umfasst, der dem Speicherbereich entspricht, auf den zugegriffen werden soll;
wobei das Verfahren vor dem Empfangen einer Speicherzugriffsanforderung ferner Folgendes umfasst:
Bestimmen einer Kapazität des lokalen Speichers und einer Kapazität des Remote-Cache in der lokalen Speichervorrichtung; und
Zuweisen von Speicheradressen zu dem lokalen Speicher und zu der Remote-Speichervorrichtung;
**dadurch gekennzeichnet, dass** das Bestimmen einer Kapazität des lokalen Speichers und einer Kapazität des Remote-Cache in der lokalen Speichervorrichtung Folgendes umfasst:
Bestimmen der Kapazität des Remote-Cache in der lokalen Speichervorrichtung gemäß einer Kapazität der Remote-Speichervorrichtung und einer voreingestellten Trefferquote, wobei die Kapazität des Remote-Cache separat in einer positiven Korrelationsbeziehung mit der Kapazität der Remote-Speichervorrichtung und der voreingestellten Trefferquote steht; und
Verwenden einer verbleibenden Kapazität der lokalen Speichervorrichtung als Kapazität des lokalen Speichers.

2. Verfahren nach Anspruch 1, wobei das Verfahren ferner Folgendes umfasst:
Ausführen einer Zugriffsoperation auf den Speicherbereich, auf den zugegriffen werden soll, entsprechend der Speicherzugriffsanforderung, wenn sich der Speicherbereich, auf den zugegriffen werden soll, in der Remote-Speichervorrichtung befindet und der Remote-Cache nicht den Cache-Block umfasst, der dem Speicherbereich entspricht, auf den zugegriffen werden soll.

3. Verfahren nach Anspruch 2, wobei das Verfahren ferner Folgendes umfasst:
Erstellen des Cache-Blocks, der dem Speicherbereich im Remote-Cache entspricht, auf den zugegriffen werden soll; und
Schreiben von Daten aus dem Speicherbereich, auf den zugegriffen werden soll, in den Cache-Block, der dem Speicherbereich entspricht, auf den zugegriffen werden soll.

4. Verfahren nach Anspruch 1, wobei die Speicherzugriffsanforderung eine Speicherschreibanforderung ist und das Verfahren ferner Folgendes umfasst:
Erstellen des Cache-Blocks, der dem Speicherbereich im Remote-Cache entspricht, auf den zugegriffen werden soll, und Schreiben von Daten der Speicherschreibanforderung in den Cache-Block, der dem Speicherbereich entspricht, auf den zugegriffen werden soll, wenn sich der Speicherbereich, auf den zugegriffen werden soll, in der Remote-Speichervorrichtung befindet und der Remote-Cache nicht den Cache-Block umfasst, der dem Speicherbereich entspricht, auf den zugegriffen werden soll.

5. Verfahren nach einem der Ansprüche 1 bis 4, wobei das Verfahren ferner Folgendes umfassend:
Zählen einer Trefferquote des Remote-Cache gemäß einer voreingestellten Periode T;
dynamisches Erhöhen der Kapazität des Remote-Cache, wenn die Trefferquote des Remote-Cache unter einem voreingestellten ersten Schwellenwert liegt; und
dynamisches Verringern der Kapazität des Remote-Cache, wenn die Trefferquote des Remote-Cache über einem voreingestellten zweiten Schwellenwert liegt, wobei der erste Schwellenwert kleiner als der zweite Schwellenwert ist.

6. Speicherzugriffsvorrichtung zur Verwendung in einem Computersystem, bei dem eine Speichervorrichtung des Computersystems eine lokale Speichervorrichtung und eine Remote-Speichervorrichtung umfasst und die Speicherzugriffsvorrichtung Folgendes umfasst:
eine Empfangseinheit (51), konfiguriert zum Empfangen einer Speicherzugriffsanforderung, wobei die Speicherzugriffsanforderung Adressinformationen eines Speicherbereichs enthält, auf den zugegriffen werden soll;
eine Bestimmungseinheit (52), konfiguriert zum Bestimmen, gemäß den Adressinformationen, des Speicherbereichs, auf den zugegriffen werden soll, der durch die Adressinformationen angegeben ist; und
eine Zugriffseinheit (53), konfiguriert zum:
Ausführen einer Zugriffsoperation auf den Speicherbereich, auf den zugegriffen werden soll, gemäß der Speicherzugriffsanforderung, wenn sich der Speicherbereich, auf den zugegriffen werden soll, im lokalen Speicher befindet, wobei die lokale Speichervorrichtung den lokalen Speicher und einen Remote-Cache umfasst und der Remote-Cache als Cache der Remote-Speichervorrichtung verwendet wird; und
Ausführen einer Zugriffsoperation auf den Cache-Block, der dem Speicherbereich entspricht, auf den zugegriffen werden soll, entsprechend der Speicherzugriffsanforderung, wenn sich der Speicherbereich, auf den zugegriffen werden soll, in der Remote-Speichervorrichtung befindet und der Remote-Cache einen Cache-Block umfasst, der dem Speicherbereich entspricht, auf den zugegriffen werden soll;
wobei die Bestimmungseinheit ferner konfiguriert ist, um eine Kapazität des lokalen Speichers und eine Kapazität des Remote-Cache in der lokalen Speichervorrichtung zu bestimmen, und die Speicherzugriffsvorrichtung ferner eine Zuweisungseinheit (54) umfasst, die konfiguriert ist, um dem lokalen Speicher und der Remote-Speichervorrichtung Speicheradressen zuzuweisen;
**dadurch gekennzeichnet, dass** beim Ausführen des Bestimmens einer Kapazität des lokalen Speichers und einer Kapazität des Remote-Cache in der lokalen Speichervorrichtung die Bestimmungseinheit speziell konfiguriert ist zum:
Bestimmen der Kapazität des Remote-Cache in der lokalen Speichervorrichtung gemäß einer Kapazität der Remote-Speichervorrichtung und einer voreingestellten Trefferquote, wobei die Kapazität des Remote-Cache separat in einer positiven Korrelationsbeziehung mit der Kapazität der Remote-Speichervorrichtung und der voreingestellten Trefferquote steht; und
Verwenden einer verbleibenden Kapazität der lokalen Speichervorrichtung als Kapazität des lokalen Speichers.

7. Speicherzugriffsvorrichtung nach Anspruch 6, wobei:
die Zugriffseinheit ferner konfiguriert ist zum:
Ausführen einer Zugriffsoperation auf den Speicherbereich, auf den zugegriffen werden soll, entsprechend der Speicherzugriffsanforderung, wenn sich der Speicherbereich, auf den zugegriffen werden soll, in der Remote-Speichervorrichtung befindet und der Remote-Cache nicht den Cache-Block umfasst, der dem Speicherbereich entspricht, auf den zugegriffen werden soll.

8. Speicherzugriffsvorrichtung nach Anspruch 7, wobei die Zugriffseinheit ferner konfiguriert ist zum:
Erstellen des Cache-Blocks, der dem Speicherbereich im Remote-Cache entspricht, auf den zugegriffen werden soll; und
Schreiben von Daten aus dem Speicherbereich, auf den zugegriffen werden soll, in den Cache-Block, der dem Speicherbereich entspricht, auf den zugegriffen werden soll.

9. Speicherzugriffsvorrichtung nach Anspruch 6, wobei die Speicherzugriffsanforderung eine Speicherschreibanforderung ist und die Zugriffseinheit ferner konfiguriert ist zum:
Erstellen des Cache-Blocks, der dem Speicherbereich im Remote-Cache entspricht, auf den zugegriffen werden soll, und Schreiben von Daten der Speicherschreibanforderung in den Cache-Block, der dem Speicherbereich entspricht, auf den zugegriffen werden soll, wenn sich der Speicherbereich, auf den zugegriffen werden soll, in der Remote-Speichervorrichtung befindet und der Remote-Cache nicht den Cache-Block umfasst, der dem Speicherbereich entspricht, auf den zugegriffen werden soll.

10. Speicherzugriffsvorrichtung nach einem der Ansprüche 6 bis 9, ferner Folgendes umfassend:
eine Zähleinheit, die konfiguriert ist, um eine Trefferquote des Remote-Cache gemäß einer voreingestellten Periode T zu zählen; und
eine Einstelleinheit, konfiguriert zum:
dynamischen Erhöhen der Kapazität des Remote-Cache, wenn die Trefferquote des Remote-Cache unter einem voreingestellten ersten Schwellenwert liegt; und
dynamischen Verringern der Kapazität des Remote-Cache wenn die Trefferquote des Remote-Cache über einem voreingestellten zweiten Schwellenwert liegt, wobei der erste Schwellenwert kleiner als der zweite Schwellenwert ist.

11. Speicherzugriffssystem, eine lokale Speichervorrichtung, eine Remote-Speichervorrichtung und die Speicherzugriffsvorrichtung nach einem der Ansprüche 6 bis 10 umfassend, wobei die lokale Speichervorrichtung einen lokalen Speicher und eine Remote-Cache umfasst, und der Remote-Cache als ein Cache der Remote-Speichervorrichtung verwendet wird.

## Revendications

1. Procédé d'accès à la mémoire, destiné à être utilisé dans un système informatique, dans lequel un dispositif de mémoire du système informatique comprend un dispositif de mémoire locale et un dispositif de mémoire distante, et le procédé comprend :
la réception (S301) d'une demande d'accès à la mémoire, la demande d'accès à la mémoire contenant des informations d'adresse d'une zone de mémoire à accéder ;
la détermination (S302), selon les informations d'adresse, de la zone de mémoire à accéder indiquée par les informations d'adresse ;
lorsque la zone de mémoire à accéder se trouve dans la mémoire locale, la réalisation (S303) d'une opération d'accès sur la zone de mémoire à accéder selon la demande d'accès à la mémoire, le dispositif de mémoire locale comprenant la mémoire locale et un cache distant, et le cache distant est utilisé comme cache du dispositif de mémoire distante ; et
lorsque la zone de mémoire à accéder se trouve dans le dispositif de mémoire distante, et le cache distant comprend un bloc de cache correspondant à la zone de mémoire à accéder, la réalisation (S303) d'une opération d'accès sur le bloc de cache correspondant à la zone de mémoire à accéder selon la demande d'accès à la mémoire ;
avant la réception d'une demande d'accès à la mémoire, le procédé comprenant en outre :
la détermination d'une capacité de la mémoire locale et d'une capacité du cache distant dans le dispositif de mémoire locale ; et
l'attribution des adresses de mémoire au dispositif de mémoire locale et au dispositif de mémoire distante ;
**caractérisé en ce que** la détermination d'une capacité de la mémoire locale et d'une capacité du cache distant dans le dispositif de mémoire locale comprend :
la détermination de la capacité du cache distant dans le dispositif de mémoire locale selon une capacité du dispositif de mémoire distante et d'un taux de succès prédéfini, la capacité du cache distant étant séparément en relation de corrélation positive avec la capacité du dispositif de mémoire distante et le taux de succès prédéfini ; et
l'utilisation d'une capacité restante du dispositif de mémoire locale comme capacité de la mémoire locale.

2. Procédé selon la revendication 1, dans lequel le procédé comprend en outre :
lorsque la zone de mémoire à accéder se trouve dans le dispositif de mémoire distante et que le cache distant ne comprend pas le bloc de cache correspondant à la zone de mémoire à accéder, la réalisation d'une opération d'accès sur la zone de mémoire à accéder selon la demande d'accès à la mémoire.

3. Procédé selon la revendication 2, dans lequel le procédé comprend en outre :
la création du bloc de cache correspondant à la zone de mémoire à accéder dans le cache distant ; et
l'écriture de données dans la zone de mémoire à accéder dans le bloc de cache correspondant à la zone de mémoire à accéder.

4. Procédé selon la revendication 1, dans lequel la demande d'accès à la mémoire est une demande d'écriture de mémoire, et le procédé comprend en outre :
lorsque la zone de mémoire à accéder se trouve dans le dispositif de mémoire distante et que le cache distant ne comprend pas le bloc de cache correspondant à la zone de mémoire à accéder, la création du bloc de cache correspondant à la mémoire à accéder dans le cache distant, et l'écriture de données de la demande d'écriture de mémoire dans le bloc de cache correspondant à la zone de mémoire à accéder.

5. Procédé selon l'une quelconque des revendications 1 à 4, dans lequel le procédé comprend en outre :
le comptage d'un taux de succès du cache distant selon une période prédéfinie T;
lorsque le taux de succès du cache distant est inférieur à un premier seuil prédéfini, l'augmentation dynamique de la capacité du cache distant ; et
lorsque le taux de succès du cache distant est supérieur à un second seuil prédéfini, la diminution dynamique de la capacité du cache distant, le premier seuil étant inférieur au second seuil.

6. Appareil d'accès à la mémoire destiné à être utilisé dans un système informatique, dans lequel un dispositif de mémoire du système informatique comprend un dispositif de mémoire locale et un dispositif de mémoire distante, et l'appareil d'accès à la mémoire comprend :
une unité de réception (51), configurée pour recevoir une demande d'accès à la mémoire, la demande d'accès à la mémoire contenant des informations d'adresse d'une zone de mémoire à accéder ;
une unité de détermination (52), configurée pour déterminer, selon les informations d'adresse, la zone de mémoire à accéder indiquée par les informations d'adresse ; et
une unité d'accès (53), configurée pour :
lorsque la zone de mémoire à accéder se trouve dans la mémoire locale, réaliser une opération d'accès sur la zone de mémoire à accéder selon la demande d'accès à la mémoire, le dispositif de mémoire locale comprenant la mémoire locale et un cache distant, et le cache distant est utilisé comme cache du dispositif de mémoire distante ; et
lorsque la zone de mémoire à accéder se trouve dans le dispositif de mémoire distante et que le cache distant comprend un bloc de cache correspondant à la zone de mémoire à accéder, réaliser une opération d'accès sur le bloc de cache correspondant à la zone de mémoire à accéder selon la demande d'accès à la mémoire ;
l'unité de détermination étant en outre configurée pour déterminer une capacité de la mémoire locale et une capacité du cache distant dans le dispositif de mémoire locale, et l'appareil d'accès à la mémoire comprend en outre une unité d'affectation (54), configurée pour attribuer des adresses de mémoire au dispositif de mémoire locale et au dispositif de mémoire distante ;
**caractérisé en ce que**, lors de l'exécution de la détermination d'une capacité de la mémoire locale et d'une capacité du cache distant dans le dispositif de mémoire locale, l'unité de détermination est spécifiquement configurée pour :
déterminer la capacité du cache distant dans le dispositif de mémoire locale selon une capacité du dispositif de mémoire distante et d'un taux de succès prédéfini, la capacité du cache distant étant séparément en relation de corrélation positive avec la capacité du dispositif de mémoire distante et le taux de succès prédéfini ; et
utiliser une capacité restante du dispositif de mémoire locale comme capacité de la mémoire locale.

7. Appareil d'accès à la mémoire selon la revendication 6, dans lequel :
l'unité d'accès est en outre configurée pour :
lorsque la zone de mémoire à accéder se trouve dans le dispositif de mémoire distante et que le cache distant ne comprend pas le bloc de cache correspondant à la zone de mémoire à accéder, réaliser une opération d'accès sur la zone de mémoire à accéder selon la demande d'accès à la mémoire.

8. Appareil d'accès à la mémoire selon la revendication 7, dans lequel l'unité d'accès est en outre configurée pour :
créer le bloc de cache correspondant à la zone de mémoire à accéder dans le cache distant ; et
écrire des données dans la zone de mémoire à accéder dans le bloc de cache correspondant à la zone de mémoire à accéder.

9. Appareil d'accès à la mémoire selon la revendication 6, dans lequel la demande d'accès à la mémoire est une demande d'écriture de mémoire, et l'unité d'accès est en outre configurée pour :
lorsque la zone de mémoire à accéder se trouve dans le dispositif de mémoire distante et que le cache distant ne comprend pas le bloc de cache correspondant à la zone de mémoire à accéder, créer le bloc de cache correspondant à la mémoire à accéder dans le cache distant, et écrire des données de la demande d'écriture de mémoire dans le bloc de cache correspondant à la zone de mémoire à accéder.

10. Appareil d'accès à la mémoire selon l'une quelconque des revendications 6 à 9, comprenant en outre :
une unité de comptage, configurée pour compter un taux de succès du cache distant selon une période prédéfinie T ; et
une unité de réglage, configurée pour :
lorsque le taux de succès du cache distant est inférieur à un premier seuil prédéfini, augmenter dynamiquement la capacité du cache distant ; et
lorsque le taux de succès du cache distant est supérieur à un second seuil prédéfini, diminuer dynamiquement la capacité du cache distant, le premier seuil étant inférieur au second seuil.

11. Système d'accès à la mémoire, comprenant un dispositif de mémoire locale, un dispositif de mémoire distante et l'appareil d'accès à la mémoire selon l'une quelconque des revendications 6 à 10, dans lequel le dispositif de mémoire locale comprend une mémoire locale et un cache distant, et le cache distant est utilisé comme cache du dispositif de mémoire distante.
